# EUROPEAN PATENT SPECIFICATION

(11) **EP 4 180 113 B1**
(45) Date of publication and mention of the grant of the patent: **02.10.2024**
(21) Application number: 22202796.3
(22) Date of filing: 20.10.2022
(51) Int. Cl.: B01D 29/11, B01D 35/02, F04B 53/16, F04B 53/20

(54) **INLET CONNECTOR AND HYDRAULIC SYSTEM**
EINLASSVERBINDER UND HYDRAULISCHES SYSTEM
RACCORD D'ENTRÉE ET SYSTÈME HYDRAULIQUE

(30) Priority: 15.11.2021 CN 202111348927
(43) Date of publication of application: 17.05.2023
(73) Proprietor: Robert Bosch GmbH, 70442 Stuttgart (DE)
(72) Inventor: Pitchaimani, Kasiperumal, Jiangsu, 214028 (CN)

(56) References cited:
- CN-A- 102 943 659
- DE-A1- 102010 028 223
- DE-A1- 102015 224 093

## Description

### Technical Field

The present application relates to the field of inlet connector structure. More specifically, the present application relates to an inlet connector, which aims to improve the filtering capability and operational reliability of the inlet connector. The present application also relates to a hydraulic system including the above-mentioned inlet connector.

### Background Art

Various hydraulic systems comprise connectors such as inlet connectors arranged in the flow channel. The inlet connector may be provided between the fluid source and the main pump, and the working fluid may flow through the inlet connector. The inlet connector usually comprises a pre-filter to at least partially filter the working fluid and exclude particles or impurities in the working fluid. The filter can be placed in the channel within the inlet connector, with paper or mesh for filtering. During operation, the paper or mesh can prevent fibers or contaminants from passing through the filter, and may fail due to trapping too many impurities after a period of time.

CN 102943659 B describes a filtration assembly.

### Content of Invention

The invention is set out in the appended set of claims.

An object of the present application is to provide an inlet connector, which aims to avoid undesired movement of the filter and improve filtration efficiency. Another object of the present application is to provide a hydraulic system including the above-mentioned inlet connector.

The purpose of this application is achieved through the following technical solutions:
An inlet connector, comprising:
a housing defining a through hole extending in an axial direction, and a mounting portion is provided at a first end of the through hole;
a bushing being configured to be inserted from a second end of the through hole, and the bushing defines a cavity therein; and
a filter comprising a body, a proximal end, and a distal end, the proximal end is configured to be fitted into the mounting portion, such that the body and the distal end are positioned within the cavity;
wherein, one or more spacers are provided between the outer surface of the filter and the inner surface of the bushing, such that the outer surface of the filter is spaced from the inner surfaces of the bushing.

In the above inlet connector, optionally, the proximal end of the filter is removably fitted to the mounting portion, and a connecting piece is provided between the proximal end and the mounting portion, such that the proximal end is attached to the mounting portion by press-fitting.

In the above inlet connector, optionally, a plurality of spacers are evenly arranged around the outer surface of the filter and are spaced apart from each other, or the one or more spacers are arranged around the entire outer surface of the filter.

In the above inlet connector the one or more spacers are positioned adjacent to the distal end.

In the above inlet connector, optionally, the one or more spacers are positioned at the outer surface of the filter by over molding process.

In the above inlet connector, optionally, the one or more spacers are configured as an elastomer, such that press fitting is provided between the filter and the bushing.

In the above inlet connector, optionally, the filter is sized such that the body extends across 50% to 95% of the length of the bushing.

In the above inlet connector, optionally, the filter is sized such that: when the proximal end is fitted to the filter mounting portion, the distal end is positioned adjacent to the second end of the through hole.

In the above inlet connector, optionally, the proximal end of the filter and the mounting portion are configured to be integral, and the proximal end supports the filter such that the filter and the bushing are positioned concentrically, and the outer surface of the filter is spaced from the inner surface of the bushing.

A hydraulic system, wherein the flow path of the hydraulic system is provided with the inlet connector as mentioned above.

### Description of Drawings

The application will be further described in detail below with reference to the accompanying drawings and preferred embodiments. Those skilled in the art will appreciate that these drawings are drawn only for the purpose of explaining the preferred embodiments, and therefore should not be construed as limiting the scope of the present application. In addition, unless particularly specified, the drawings are only intended to conceptually represent the composition or configuration of the described objects, and may contain exaggerated displaying. The drawings are not necessarily drawn to scale.
Fig. 1 is a cross-sectional view of a conventional inlet connector.
Fig. 2 is a cross-sectional view of an embodiment of the inlet connector of the present application.
Fig. 3 shows an embodiment of the B1-B1 cross-section of the embodiment shown in Fig. 2.
Fig. 4 shows another embodiment of the B1-B1 cross-section of the embodiment shown in Fig. 2.
Fig. 5 is a cross-sectional view of another embodiment of the inlet connector of the present application.
Fig. 6 is a cross-sectional view of further embodiment of the inlet connector of the present application.

### Detailed description of embodiment(s)

Hereinafter, preferred embodiments of the present application will be described in detail with reference to the accompanying drawings. Those skilled in the art will appreciate that these descriptions are only descriptive and exemplary, and should not be construed as limiting the protection scope of the present application.

First of all, it should be noted that the orientation terms such as top, bottom, upward, downward, etc. mentioned in the context are defined relative to the directions in the respective drawings. These positions are relative concepts, and therefore will vary according to their position and state. Therefore, these or other orientation terms should not be construed as restrictive.

In addition, it should also be pointed out that for any single technical feature described or implied in the embodiments herein or any single technical feature shown or implied in the drawings, it is possible to continue combing these technical features (or their equivalents), so as to obtain other embodiments that are not directly mentioned in the context.

It should be noted that in different drawings, the same reference numerals indicate the same or substantially the same components.

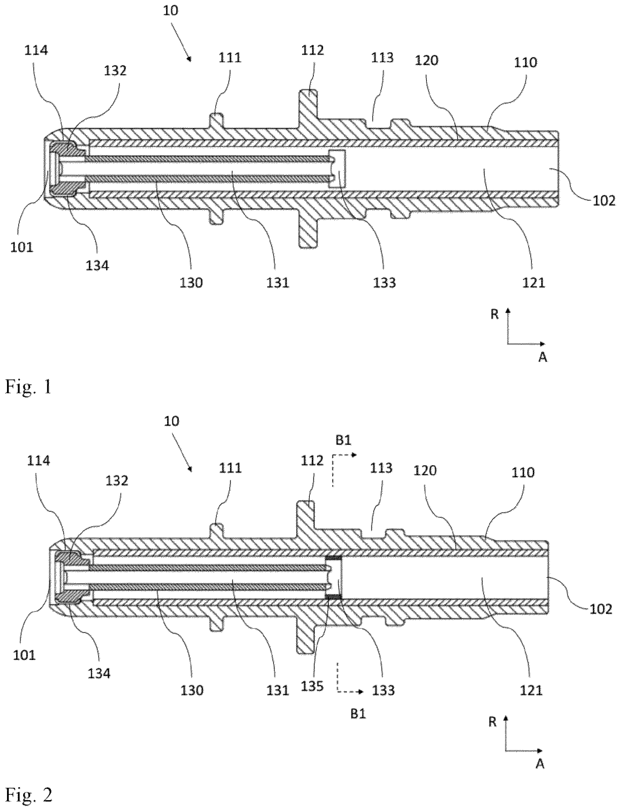

Fig. 1 is a cross-sectional view of a conventional inlet connector. The inlet connector 10 comprises a housing 110, a bushing 120 and a filter 130.

The housing 110 may be configured to be substantially cylindrical and have a through hole in the axial direction A. The through hole may extend from one end of the housing 110 to the other end. A mounting portion 114 may be provided at a first end 101 of the through hole, and the second end 102 may be configured to be suitable for installing the bushing 120. A protrusion may be provided on the inner surface of the through hole, so as to separate the mounting part 114 and the part for installing the bushing 120. The outer surface of the housing 110 may be provided with one or more convex. For example, in the embodiment shown in FIG. 1, the outer surface of the housing 110 is provided with a first convex 111 and a second convex 112. The convex can be used to snap the inlet connector 10 into a structure not shown, so as to fix the inlet connector 10 in place. In addition, the outer surface of the housing 110 may also be provided with one or more recesses. For example, in the embodiment shown in FIG. 1, the outer surface of the housing 110 is provided with a recess 113. The recess 113 can be used for structural connection, or can be used for installing a sealing ring.

The bushing 120 may be configured to be adapted to be installed from the second end 102 of the housing 110. The bushing 120 may be configured to be generally cylindrical and define a cavity 121 therein.

The filter 130 may comprise a body 131, a proximal end 132 and a distal end 133. The proximal end 132 and the distal end 133 may be provided at both ends of the body 131, respectively. The proximal end 132 may be configured to be fitted to the mounting portion 114. In one embodiment, the proximal end 132 is attached to the mounting portion 114 by a connecting piece 134, and press fitting is provided between the proximal end 132, the connecting piece 134, and the mounting portion 114. The main body 131 may be provided with mesh, paper or other filtering materials for filtering. In the illustrated embodiment, the proximal end 132 fixes the filter 130 in place, such that the body 131 and the distal end 133 are positioned in the cavity 121 of the bushing 120, and the filter 130 and the bushing 120 are spaced apart in a radial direction. In the illustrated embodiment, the distal end 133 is positioned approximately in the middle of the housing 110. In one embodiment, the filter 130 is a pre-filter.

As used herein, the axial direction refers to the direction in which the central axis of the housing 110, the bushing 120 and the filter 130 are located, and the radial direction refers to the direction perpendicular to the axial direction.

During use, the working fluid firstly enters from the first end 101 of the through hole of the housing 110 in the axial direction, travels to the proximal end 132 of the filter 130, continues to travel to the body 131, and contacts the filter material to conduct filtering. The filtered working fluid passes through the distal end 133, exits the filter 130, and continues to travel along the cavity 121 through the bushing 120, and finally exits the second end 102 of the through hole of the housing 110.

However, the existing inlet connector 10 may have certain disadvantages. For example, the housing 110, the bushing 120, and the filter 130 are separate components, and therefore need to be manufactured or purchased separately and then assembled. Such a design increases the cost. In addition, the part of the filter 130 other than the proximal end 132 is not in contact with other components, and problems such as bending, installation misalignment, and torsion may occur in actual operation.

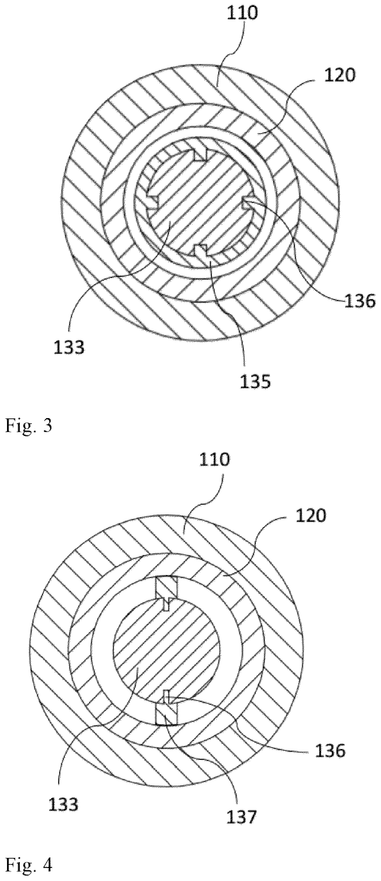

FIG. 2 is a cross-sectional view of an embodiment of the inlet connector of the present application, FIG. 3 shows an embodiment of the B1-B1 cross section of the embodiment shown in FIG. 2, and FIG. 4 shows the B1-B1 cross section of another embodiment shown in FIG. 2.

One or more spacers 135 may be provided between the outer surface of the filter 130 and the inner surface of the bushing 120. For example, the one or more spacers 135 may be an elastomer, and may be attached to the outer surface of the filter 130 by an over-molding process. In one embodiment, the one or more spacers 135 may be separated from the inner surface of the bushing 120. In one embodiment, the one or more spacers 135 may be provided at the distal end 133. In another embodiment, the one or more spacers 135 may be provided at the body 131. It can be seen from the cross sections of FIGS. 3 and 4 that the one or more spacers 135 can be dispersed on the outer surface of the filter 130. A plurality of spacers 135 may be dispersedly arranged, or may be overlapped in the cross-sectional direction. In one embodiment, the outer surface of the entire cross-section of the filter 130 may be surrounded by the one or more spacers 135, as shown in FIG. 3. In another embodiment, the one or more spacers 135 may be configured as a separate spacer 137, as shown in FIG. 4. The one or more spacers 135 may be connected to the filter 130 by fasteners 136, and may be molded on the outer surface of the filter 130. In the embodiment shown in FIGS. 3 and 4, the one or more spacers 135 and the one or more spacers 137 are both located at the distal end 133. It is easy to understand that the position of the one or more spacers 135 and the one or more spacers 137 are not limited to those shown in the figure, but may have other distribution.

The one or more spacers 135 may be sized to be positioned between the filter 130 and the bushing 120 and under pressure, so as to provide press fitting between the filter 130 and the bushing 120.

By providing the one or more spacers, the position of the filter 130 relative to the bushing 120 is fixed, and the bending or twisting of the filter 130 is avoided, thereby ensuring the normal operation of the filtering operation.

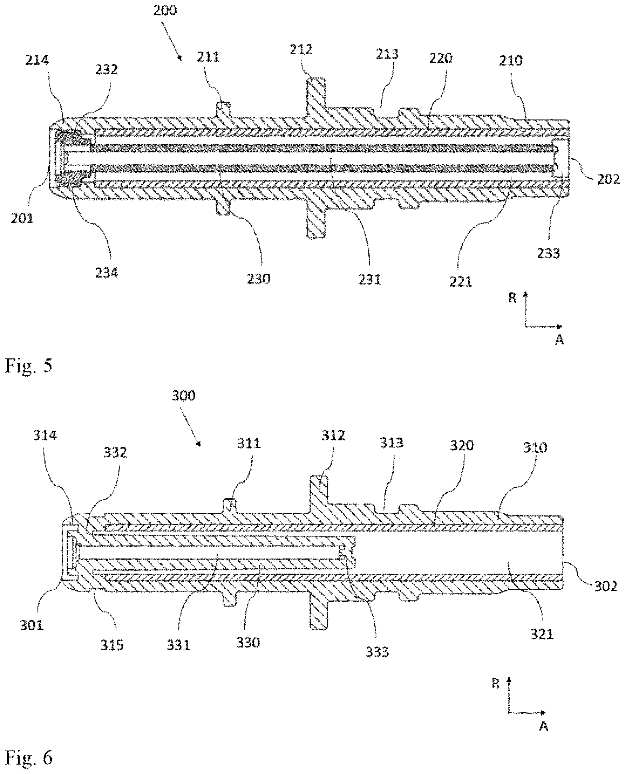

Fig. 5 is a cross-sectional view of another embodiment of the inlet connector of the present application. The inlet connector 200 may comprise a housing 210, a bushing 220, and a filter 230. The housing 210 is provided with a through hole extending in the axial direction A, and the through hole may extend from the first end 201 to the second end 202. A mounting portion 214 is provided at the first end 201 of the through hole. The bushing 220 is installed into the through hole through the second end 202, and the bushing 220 defines a cavity 221 therein. The filter 230 comprises a body 231, a proximal end 232 and a distal end 233. The proximal end 232 is adapted to the mounting portion 214, so as to fix the filter 230 in place. The body 231 is sized such that the distal end 233 is adjacent to the second end 202. In one embodiment, the body 231 is sized such that the body 231 extends across between 50% and 95% of the length of the bushing 220. In another embodiment, the outer surface of the filter 230 may be provided with spacers similar to the embodiments shown in FIGS. 2-4.

Similarly, the outer surface of the housing 210 may be provided with one or more convex. For example, in the embodiment shown in FIG. 5, the outer surface of the housing 210 is provided with a first convex 211 and a second convex 212. The convex can be used to snap the inlet connector 200 into a structure not shown, so as to fix the inlet connector 200 in place. In addition, the outer surface of the housing 210 may also be provided with one or more recesses. For example, in the embodiment shown in FIG. 5, the outer surface of the housing 210 is provided with a recess 213. The recess 213 can be used for structural connection, or can be used for installing a sealing ring.

By setting the length dimension of the body 231, the filter 230 provides improved filtering capacity and delays the blocking and failure of the filter.

Fig. 6 is a cross-sectional view of further embodiment of the inlet connector of the present application. The inlet connector 300 may comprise a housing 310, a bushing 320, and a filter 330. The housing 310 comprises a through hole oriented in the axial direction A, and the through hole extends from the first end 301 to the second end 302. The bushing 320 is inserted through the second end 302 of the through hole and defines a cavity 321 therein. The filter 330 may be configured to be integral with the housing 310. For example, a mounting part 314 may be formed at the first end 301 of the through hole, and the filter 330 is integrally connected with the housing 310 at the mounting part 314. Similarly, the filter 330 may comprise a body 331, a proximal end 332, and a distal end 333, and may have the filtering function described above. The proximal end 332 supports the filter 330, such that the housing 310, the bushing 320, and the filter 330 are configured to be concentric, and the outer surface of the filter 330 is spaced apart from the inner surface of the bushing 320.

Similarly, the outer surface of the housing 310 may be provided with one or more convex. For example, in the embodiment shown in FIG. 6, the outer surface of the housing 310 is provided with a first convex 311 and a second convex 312. The convex can be used to snap the inlet connector 300 into a structure not shown, so as to fix the inlet connector 300 in place. In addition, the outer surface of the housing 310 may also be provided with one or more recesses. For example, in the embodiment shown in FIG. 6, the outer surface of the housing 310 is provided with a recess 313. The recess 313 can be used for structural connection, or can be used for installing a sealing ring. Additionally, a second recess 315 might be provided near the first end 301 of the housing 310.

By adopting the design of FIG. 6, the position of the filter 330 can be effectively determined, preventing the body 331 from undesired deflection or distortion, thereby improving the filtering capacity and reliability of the filter.

The present application also relates to a hydraulic system including a flow path for working fluid. The inlet connector as mentioned above may be provided in the flow path. For example, the inlet connector can be provided between the fluid source and the main pump, so as to function as a pre-filter.

The inlet connector and hydraulic system of the present application have the advantages of being simple, reliable, easy for implementation, and convenient in using, etc., and can provide improved filtering capacity and extend service life.

This specification discloses the present application with reference to the accompanying drawings, and also enables those skilled in the art to implement the present application, including manufacturing and using any device or system, selecting appropriate materials, and using any combined method. The scope of this application is defined by the claimed technical solution and comprises other examples that occur to those skilled in the art. As long as such other examples comprise structural elements that are not different from the literal language of the claimed technical solution, or such other examples comprise equivalent structural elements that are not substantially different from the literal language of the claimed technical solution, such other examples should be considered as falling within the scope of protection determined by the technical solution claimed in this application.

## Claims

1. An inlet connector (10, 200, 300) , **characterized in that** it comprises:
a housing (110, 210, 310) defining a through hole extending in an axial direction (A), and a mounting portion (114, 214, 314) is provided at a first end (101, 201, 301) of the through hole;
a bushing (120, 220, 320) being configured to be inserted from a second end (102, 202, 302) of the through hole, and the bushing (120, 220, 320) defines a cavity (121, 221, 321) therein; and
a filter (130, 230, 330) comprising a body (131, 231, 331), a proximal end (132, 232, 332), and a distal end (133, 233, 333), **characterized in that** the proximal end (132, 232, 332) is configured to be fitted into the mounting portion (114, 214, 314), such that the body (131, 231, 331) and the distal end (133, 233, 333) are positioned within the cavity (121, 221, 321);
wherein, one or more spacers (135, 137) are provided between the outer surface of the filter (130, 230, 330) and the inner surface of the bushing (120, 220, 320), such that the outer surface of the filter (130, 230, 330) is spaced from the inner surfaces of the bushing (120, 220, 320),
wherein the one or more spacers (135, 137) are positioned adjacent to the distal end (133, 233, 333).

2. The inlet connector (10, 200) according to claim 1, wherein the proximal end (132, 232) of the filter (130, 230) is removably fitted to the mounting portion (114, 214), and a connecting piece (134, 234) is provided between the proximal end (132, 232) and the mounting portion (114, 214), such that the proximal end (132, 232) is attached to the mounting portion (114, 214) by press-fitting.

3. The inlet connector according to claim 1, wherein a plurality of spacers (137) are evenly arranged around the outer surface of the filter (130, 230, 330) and are spaced apart from each other, or the one or more spacers (135) are arranged around the entire outer surface of the filter (130, 230, 330).

4. The inlet connector (10, 200, 300) according to claim 1, wherein the one or more spacers (135, 137) are positioned at the outer surface of the filter (130, 230, 330) by over molding process.

5. The inlet connector (10, 200, 300) according to claim 1, wherein the one or more spacers (135, 137) are configured as an elastomer, such that press fitting is provided between the filter (130, 230, 330) and the bushing (120, 220, 320).

6. The inlet connector (10, 200, 300) of claim 1, wherein the filter (130, 230, 330) is sized such that the body (131, 231, 331) extends across 50% to 95% of the length of the bushing (120, 220, 320).

7. The inlet connector (10, 200, 300) according to claim 6, wherein the filter (130, 230, 330) is sized such that: when the proximal end (132, 232, 332) is fitted to the filter mounting portion (114, 214, 314), the distal end (133, 233, 333) is positioned adjacent to the second end (102, 202, 302) of the through hole.

8. The inlet connector (10, 200, 300) according to claim 1, wherein the proximal end (132, 232, 332) of the filter (130, 230, 330) and the mounting portion (114, 214, 314) are configured to be integral, and the proximal end (132, 232, 332) supports the filter (130, 230, 330) such that the filter (130, 230, 330) and the bushing (120, 220, 320) are positioned concentrically, and the outer surface of the filter (130, 230, 330) is spaced from the inner surface of the bushing (120, 220, 320).

9. A hydraulic system, wherein the flow path of the hydraulic system is provided with the inlet connector (10, 200, 300) according to any one of claims 1-8.

## Patentansprüche

1. Einlassverbinder (10, 200, 300), **dadurch gekennzeichnet, dass** er umfasst:
ein Gehäuse (110, 210, 310), das ein Durchgangsloch definiert, das sich in einer axialen Richtung (A) erstreckt, und ein Befestigungsabschnitt (114, 214, 314) an einem ersten Ende (101, 201, 301) des Durchgangslochs vorgesehen ist;
eine Buchse (120, 220, 320), die dazu ausgelegt ist, von einem zweiten Ende (102, 202, 302) des Durchgangslochs eingesetzt zu werden, und die Buchse (120, 220, 320) einen Hohlraum (121, 221, 321) darin definiert; und
einen Filter (130, 230, 330), der einen Körper (131, 231, 331), ein nah gelegenes Ende (132, 232, 332) und ein fern gelegenes Ende (133, 233, 333) umfasst, **dadurch gekennzeichnet, dass** das nah gelegene Ende (132, 232, 332) dazu ausgelegt ist, in den Befestigungsabschnitt (114, 214, 314) so eingepasst zu werden, dass der Körper (131, 231, 331) und das fern gelegene Ende (133, 233, 333) innerhalb des Hohlraums (121, 221, 321) positioniert sind;
wobei ein oder mehrere Abstandshalter (135, 137) so zwischen der Außenfläche des Filters (130, 230, 330) und der Innenfläche der Buchse (120, 220, 320) vorgesehen sind, dass die Außenfläche des Filters (130, 230, 330) von den Innenflächen der Buchse (120, 220, 320) beabstandet ist,
wobei der eine oder die mehreren Abstandshalter (135, 137) an das fern gelegene Ende (133, 233, 333) angrenzend positioniert sind.

2. Einlassverbinder (10, 200) nach Anspruch 1, wobei das nah gelegene Ende (132, 232) des Filters (130, 230) abnehmbar an dem Befestigungsabschnitt (114, 214) angebracht ist und ein Verbindungsstück (134, 234) so zwischen dem nah gelegenen Ende (132, 232) und dem Befestigungsabschnitt (114, 214) vorgesehen ist, dass das nah gelegene Ende (132, 232) durch Presspassen an dem Befestigungsabschnitt (114, 214) befestigt ist.

3. Einlassverbinder nach Anspruch 1, wobei eine Vielzahl von Abstandshaltern (137) gleichmäßig um die Außenfläche des Filters (130, 230, 330) herum angeordnet und voneinander beabstandet sind oder der eine oder die mehreren Abstandshalter (135) um die gesamte Außenfläche des Filters (130, 230, 330) herum angeordnet sind.

4. Einlassverbinder (10, 200, 300) nach Anspruch 1, wobei der eine oder die mehreren Abstandshalter (135, 137) an der Außenfläche des Filters (130, 230, 330) durch einen Überspritzprozess positioniert sind.

5. Einlassverbinder (10, 200, 300) nach Anspruch 1, wobei der eine oder die mehreren Abstandshalter (135, 137) als ein Elastomer so ausgelegt sind, dass zwischen dem Filter (130, 230, 330) und der Buchse (120, 220, 320) ein Presssitz vorgesehen ist.

6. Einlassverbinder (10, 200, 300) nach Anspruch 1, wobei der Filter (130, 230, 330) so bemessen ist, dass sich der Körper (131, 231, 331) über 50 % bis 95 % der Länge der Buchse (120, 220, 320) erstreckt.

7. Einlassverbinder (10, 200, 300) nach Anspruch 6, wobei der Filter (130, 230, 330) so bemessen ist, dass, wenn das nah gelegene Ende (132, 232, 332) an dem Filterbefestigungsabschnitt (114, 214, 314) angebracht ist, das fern gelegene Ende (133, 233, 333) an das zweite Ende (102, 202, 302) des Durchgangslochs angrenzend positioniert ist.

8. Einlassverbinder (10, 200, 300) nach Anspruch 1, wobei das nah gelegene Ende (132, 232, 332) des Filters (130, 230, 330) und der Befestigungsabschnitt (114, 214, 314) einstückig ausgelegt sind und das nah gelegene Ende (132, 232, 332) den Filter (130, 230, 330) so stützt, dass der Filter (130, 230, 330) und die Buchse (120, 220, 320) konzentrisch positioniert sind, und die Außenfläche des Filters (130, 230, 330) von der Innenfläche der Buchse (120, 220, 320) beabstandet ist.

9. Hydraulisches System, wobei der Strömungsweg des hydraulischen Systems mit dem Einlassverbinder (10, 200, 300) nach einem der Ansprüche 1-8 versehen ist.

## Revendications

1. Raccord d'entrée (10, 200, 300), **caractérisé en ce qu'**il comprend :
un logement (110, 210, 310) définissant un trou traversant s'étendant dans une direction axiale (A), et une partie de montage (114, 214, 314) est placée à une première extrémité (101, 201, 301) du trou traversant ;
une douille (120, 220, 320) conçue pour être insérée depuis une seconde extrémité (102, 202, 302) du trou traversant, et la douille (120, 220, 320) définit une cavité (121, 221, 321) en son sein ; et
un filtre (130, 230, 330) comprenant un corps (131, 231, 331), une extrémité proximale (132, 232, 332) et une extrémité distale (133, 233, 333), **caractérisé en ce que** l'extrémité proximale (132, 232, 332) est conçue pour s'ajuster dans la partie de montage (114, 214, 314), de sorte que le corps (131, 231, 331) et l'extrémité distale (133, 233, 333) soient positionnés à l'intérieur de la cavité (121, 221, 321) ;
dans lequel une ou plusieurs entretoises (135, 137) sont placées entre la surface externe du filtre (130, 230, 330) et la surface interne de la douille (120, 220, 320), de sorte que la surface externe du filtre (130, 230, 330) soit espacée des surfaces internes de la douille (120, 220, 320),
dans lequel la ou les entretoises (135, 137) sont positionnées adjacentes à l'extrémité distale (133, 233, 333) .

2. Raccord d'entrée (10, 200) selon la revendication 1, dans lequel l'extrémité proximale (132, 232) du filtre (130, 230) est ajustée de façon amovible sur la partie de montage (114, 214), et une pièce de liaison (134, 234) est placée entre l'extrémité proximale (132, 232) et la partie de montage (114, 214), de sorte que l'extrémité proximale (132, 232) soit fixée à la partie de montage (114, 214) par ajustement par pression.

3. Raccord d'entrée selon la revendication 1, dans lequel une pluralité d'entretoises (137) sont disposées de façon égale autour de la surface externe du filtre (130, 230, 330) et sont espacées les unes des autres, ou la ou les entretoises (135) sont disposées autour de l'entièreté de la surface externe du filtre (130, 230, 330) .

4. Raccord d'entrée (10, 200, 300) selon la revendication 1, dans lequel la ou les entretoises (135, 137) sont positionnées sur la surface externe du filtre (130, 230, 330) par un processus de surmoulage.

5. Raccord d'entrée (10, 200, 300) selon la revendication 1, dans lequel la ou les entretoises (135, 137) sont conçues sous la forme d'un élastomère, de façon à fournir un ajustement par pression entre le filtre (130, 230, 330) et la douille (120, 220, 320).

6. Raccord d'entrée (10, 200, 300) selon la revendication 1, dans lequel le filtre (130, 230, 330) est dimensionné de telle sorte que le corps (131, 231, 331) s'étend sur 50 % à 95 % de la longueur de la douille (120, 220, 320).

7. Raccord d'entrée (10, 200, 300) selon la revendication 6, dans lequel le filtre (130, 230, 330) est dimensionné de telle sorte que : lorsque l'extrémité proximale (132, 232, 332) est ajustée sur la partie de montage de filtre (114, 214, 314), l'extrémité distale (133, 233, 333) est positionnée adjacente à la seconde extrémité (102, 202, 302) du trou traversant.

8. Raccord d'entrée (10, 200, 300) selon la revendication 1, dans lequel l'extrémité proximale (132, 232, 332) du filtre (130, 230, 330) et la partie de montage (114, 214, 314) sont conçues pour être d'un seul tenant, et l'extrémité proximale (132, 232, 332) supporte le filtre (130, 230, 330) de sorte que le filtre (130, 230, 330) et la douille (120, 220, 320) soient positionnés de façon concentrique, et que la surface externe du filtre (130, 230, 330) soit espacée de la surface interne de la douille (120, 220, 320).

9. Système hydraulique, dans lequel le trajet d'écoulement du système hydraulique est pourvu du raccord d'entrée (10, 200, 300) selon l'une quelconque des revendications 1 à 8.
